# EUROPEAN PATENT APPLICATION

(11) **EP 3 016 211 A1**
(43) Date of publication of application: **04.05.2016**
(21) Application number: 14818213.2
(22) Date of filing: 09.06.2014
(51) Int. Cl.: H01R 13/52, H01R 13/502

(54) **ELECTRICAL OUTLET**

(30) Priority: 28.06.2013 JP 2013136794
(71) Applicant: Panasonic Intellectual Property Management Co., Ltd., Osaka-shi, Osaka 540-6207 (JP)
(72) Inventor: YONEDA, Takashi, Osaka-shi, Osaka 540-6207 (JP); NISHIGAKI, Shunji, Tokyo 107-0052 (JP)
(74) Representative: Appelt, Christian W.
(86) International application number: PCT/JP2014/003057
(87) International publication number: WO 2014/208024

(57) **Abstract**

An electrical outlet includes a body (1) in which first and second insertion holes (42a, 42b) are formed side by side in one direction, first and second contact receivers (5a, 5b), a first lid (6a) that moves from a first closed position toward a first open position, a second lid (6b) that moves from a second closed position toward a second open position, and a return spring (7) that is provided between the first lid (6a) and the second lid (6b) in the one direction. The first lid (6a), upon a first plug being inserted into the first insertion hole (42a), moves and is displaced to the first open position while compressing the return spring (7). The second lid (6b), upon a second plug being inserted into the second insertion hole (42b), moves and is displaced to the second open position while compressing the return spring (7).

## Description

### TECHNICAL FIELD

This invention generally relates to electrical outlets, and more specifically relates to an electrical outlet in which two sets of insertion holes through which contacts of a plug are to be inserted are formed in a body.

### BACKGROUND ART

Conventionally, there are two-port electrical outlets that have a built-in transformer and can output different voltages (refer to JP 09-17495 A, for example). Each of these electrical outlets has two set of insertion holes through which contacts of a plug are to be inserted, and can output voltages different from each other to the two plugs whose contacts have been inserted through the insertion holes. This type of electrical outlet is used as a shaver electrical outlet provided in hotel bathroom, for example, and is compatible with various apparatuses (such as shavers) having different operating voltages.

Also, there are electrical outlets that include a lid for preventing foreign objects from entering inside the electrical outlet. The lid includes lid pieces that each open and close one corresponding insertion hole, and is configured to be movable between a closed position at which the insertion holes are closed and an open position at which the insertion holes are open. Also, each lid piece is provided with a return spring, and is biased toward the closed position by the return spring. Each lid piece comes into contact with a contact of a plug that is inserted through the insertion hole, and as the insertion amount of the contact increases, moves from the closed position toward the open position while compressing the return spring.

However, because the rated output of a transformer that is built in the electrical outlet is small, when the contacts of two plugs are inserted through the respective two sets of insertion holes at the same time, desired electric power cannot be supplied to the apparatuses that are connected, and the transformer and the connected apparatuses may be damaged.

Furthermore, the return spring is provided in each lid piece, and the number of return springs needs to be the same as the number of lid pieces, and therefore there has been a problem in that the electrical outlet increases in size.

### SUMMARY OF INVENTION

The present invention has been made in view of the above-described problems, and an object of the present invention is to provide an electrical outlet that is compact and can prevent two plugs from being connected at the same time.

An electrical outlet according to the present invention includes a body, a first contact receiver, a second contact receiver, a first lid, a second lid, and a return spring. At least one first insertion hole and at least one second insertion hole are formed side by side in one direction in the body. A contact of a first plug is to be inserted through the at least one first insertion hole. A contact of a second plug is to be inserted through the at least one second insertion hole. The first contact receiver is housed in the body. The contact of the first plug, when inserted through the at least one first insertion hole, is brought into conductive contact with the first contact receiver. The second contact receiver is housed in the body. The contact of the second plug, when inserted through the at least one second insertion hole, is brought into conductive contact with the second contact receiver. The first lid is housed in the body and comes into contact with the contact of the first plug that is inserted through the at least one first insertion hole. The first lid is configured to move, as an insertion amount of the contact of the first plug increases, from a first closed position, on a first end side in the one direction, at which the at least one first insertion hole is closed toward a first open position, on a second end side in the one direction, at which the at least one first insertion hole is open. The second lid is housed in the body and comes into contact with the contact of the second plug that is inserted through the at least one second insertion hole. The second lid is configured to move, as an insertion amount of the contact of the second plug increases, from a second closed position, on the second end side in the one direction, at which the at least one second insertion hole is closed toward a second open position, on the first end side in the one direction, at which the at least one second insertion hole is open. The return spring is provided between the first lid and the second lid in the one direction. The return spring is configured to position the first lid in the first closed position by biasing the first lid toward the first end side in the one direction, and position the second lid in the second closed position by biasing the second lid toward the second end side in the one direction. When the contact of the first plug is inserted through the at least one first insertion hole, the first lid moves toward the second end side in the one direction from the first closed position and is displaced to the first open position while compressing the return spring. When the contact of the second plug is inserted through the at least one second insertion hole, the second lid moves toward the first end side in the one direction from the second closed position and is displaced to the second open position while compressing the return spring.

As described above, in the present invention, the return spring is provided between the first lid and the second lid in the one direction, and when a contact of a plug is inserted through one of the insertion holes, one lid corresponding to the insertion hole moves toward the other lid while compressing the return spring. Accordingly, as a result of the number of the return springs being reduced and one lid restricting movement of the other lid, the effects of miniaturization and preventing two plugs from being connected at the same time can be realized.

### BRIEF DESCRIPTION OF DRAWINGS

Preferable embodiments according to the present invention will be described in more detail. Other features and advantages of the present invention will be better understood with reference to the following detailed description and the attached drawings:
FIG. 1 is an exploded perspective view of an electrical outlet according to an embodiment of the present invention;
FIG. 2A is a front view of the electrical outlet according to the embodiment of the present invention, FIG. 2B is a right side view of the electrical outlet according to the embodiment of the present invention, and FIG. 2C is a bottom view of the electrical outlet according to the embodiment of the present invention;
FIGs. 3A and 3B are external views of first and second bases;
FIG. 4 is an external view of first and second lids and return springs;
FIGs. 5A and 5B are external views of the first lid;
FIG. 6A is a perspective view illustrating a state in which the first lid is in a first closed position, and FIG. 6B is a perspective view illustrating a state in which the first lid is in a first open position;
FIG. 7A is a side view illustrating a state in which the first lid is in the first open position, and FIG. 7B is a side view illustrating a state in which the second lid is in a second open position;
FIG. 8A is a side view of a first plug when viewed from a direction that is orthogonal to an insertion direction, FIG. 8B is a side view of the first plug when viewed from another direction that is orthogonal to the insertion direction, FIG. 8C is a front view of the first plug when viewed from the insertion direction, and FIG. 8D is a perspective view of the first plug; and
FIG. 9A is a front view of a second plug when viewed from an insertion direction, and FIG. 9B is a side view of main portions of the second plug when viewed from a direction that is orthogonal to the insertion direction.

### DESCRIPTION OF EMBODIMENTS

Hereinafter, an embodiment of the present invention will be described with reference to the drawings.

### Embodiment

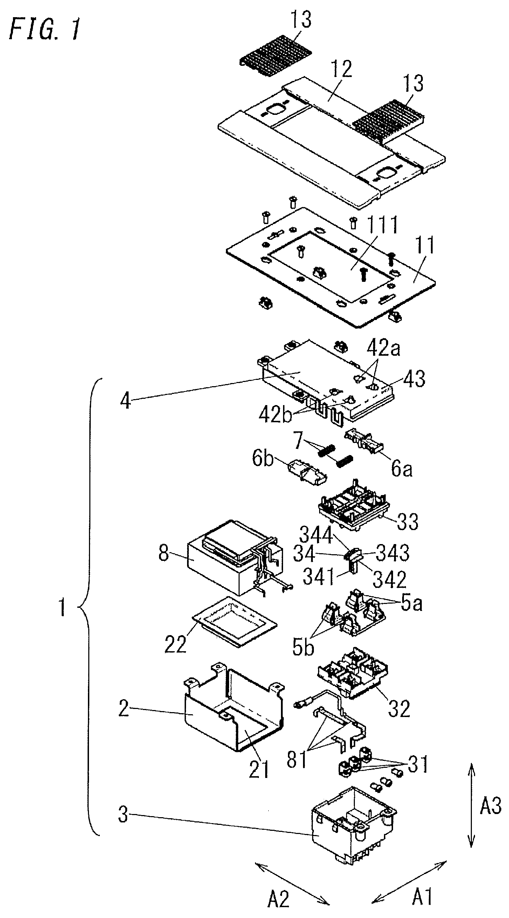

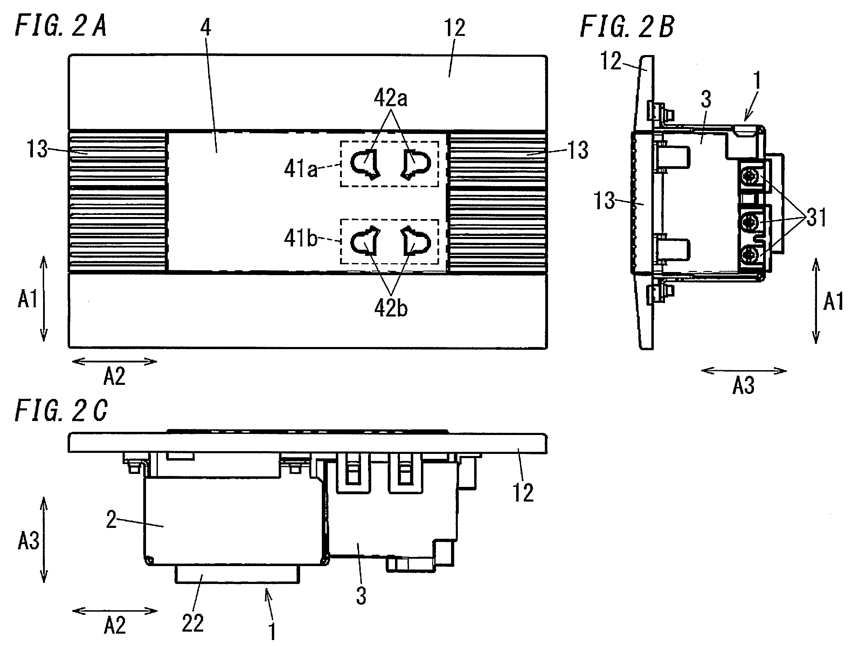

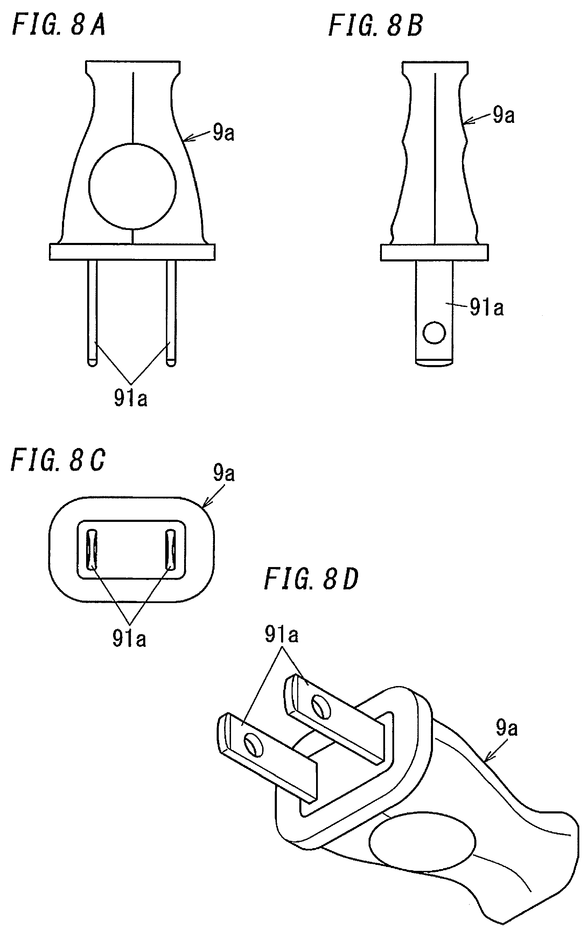

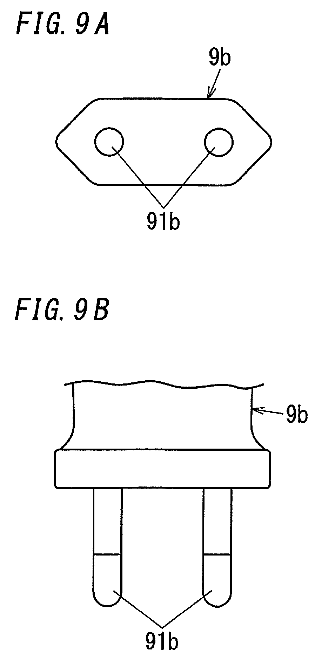

An electrical outlet of the present embodiment is a two port electrical outlet that includes two pairs of insertion holes through which a pair of contacts of a plug is to be inserted and outputs voltages (110 V/220 V or 110 V/230 V, for example) that are different from each other from the respective ports. The electrical outlet is used as a shaver electrical outlet that is provided in a hotel bathroom, for example. A first plug 9a (refer to FIGs. 8A to 8D) or a second plug 9b (refer to FIGs. 9A and 9B) is to be connected to the electrical outlet. The first plug 9a is included in a first apparatus (not shown) whose working voltage is 110 V The second plug 9b is included in a second apparatus (not shown) whose working voltage is 220 V or 230 V. Hereinafter, the configuration of the electrical outlet of the present embodiment will be described with reference to FIGs. 1 to 7B. Note that description will be given while defining that, using the up-down and right-left directions in FIG. 2A as references, a direction orthogonal to both the up-down direction A1 and the right-left direction A2 is a front-rear direction A3, a direction toward the near side in the front-rear direction A3 is a forward direction, and a direction toward the far side in the front-rear direction A3 is a rearward direction.

The electrical outlet of the present embodiment includes a body 1 having two pairs of insertion holes (pair of first insertion holes 42a, pair of second insertion holes 42b) through which contacts (pair of contacts 91a, pair of contacts 91b) of a plug (first plug 9a, second plug 9b) is to be inserted. The body 1 houses two pairs of contact receivers (pair of first contact receivers 5a, pair of second contact receivers 5b) through which contacts are to be brought into conductive contact, two lids (first and second lids 6a and 6b) that are configured to open or close the insertion holes, a transformer 8, and the like. Also, the electrical outlet includes an attachment plate 11 having an opening 111 shaped like a rectangle through which a front surface of the body 1 is exposed, and is installed in an embedded state in an opening formed in a wall surface of a structure using the attachment plate 11. Also, face panels 12 and 13 are provided on a front surface of the attachment plate 11.

The body 1 is formed in a hollow rectangular box-like shape by combining a first container 2, a second container 3, and a cover 4. The first container 2 is formed in a rectangular box-like shape whose front and right surfaces are open. The second container 3 is formed in a rectangular box-like shape whose front surface is open, and covers the right side opening of the first container 2 from the right side. The cover 4 covers the front side openings of the first and second containers 2 and 3 from the front side.

The cover 4 includes a front surface shaped like a rectangle, and the first insertion portion 41a and the second insertion portion 41b are formed in the front surface side by side in the up-down direction A1. Note that the first insertion portion 41a is formed on an upper side relative to the second insertion portion 41b.

The first insertion portion 41a includes the pair of first insertion holes 42a, 42a that are formed side by side in the right-left direction A2. The pair of first insertion holes 42a, 42a is formed in a front surface (predetermined surface) 43, of the cover 4 (body 1), that extends along the up-down direction A1. The pair of contacts (pair of first contacts) 91a included in the first plug 9a is inserted through the pair of first insertion holes 42a, 42a. Also, the second insertion portion 41b includes the pair of second insertion holes 42b, 42b that are formed side by side in the right-left direction A2. The pair of second insertion holes 42b, 42b is formed in the front surface (predetermined surface) 43, of the cover 4 (body 1), that extends along the up-down direction A1. The pair of contacts (pair of second contact) 91b included in the second plug 9b is inserted through the pair of second insertion holes 42b, 42b. Note that the first insertion hole 42a on the left side and the second insertion hole 42b on the left side are formed side by side in the up-down direction A1, and the first insertion hole 42a on the right side and the second insertion hole 42b on the right side are formed side by side in the up-down direction A1. Also, each of the first and second insertion holes 42a and 42b is a so-called universal type electrical outlet port in which a hole shaped like a rectangle into which a contact (contact 91a, for example) shaped like a flat plate can be inserted and a hole shaped like a circle into which a contact (contact 91b, for example) shaped like a round bar can be inserted are integrally formed. Accordingly, contacts of two or more types of plugs can be inserted into the first and second insertion holes 42a and 42b. Note that although the contact 91a of the first plug 9a shown in FIGs. 8A to 8D is a flat blade, the contact of the first plug that is to be inserted through the first insertion hole 42a may have a shape other than the flat blade shape. Although the contact 91b of the second plug 9b shown in FIGs. 9A and 9B is a round pin, the contact of the second plug that is to be inserted through the second insertion hole 42b may have a shape other than the round pin shape. The contacts of the first plug that are to be inserted through the first insertion holes 42a and the contacts of the second plug that are to be inserted through the second insertion holes 42b may have the same shape or may have different shapes.

The first container 2 is provided behind the cover 4, and houses the transformer 8. An opening 21 shaped like a rectangle is formed in a rear surface of the first container 2, and a base 22 shaped like a rectangle is fitted therein from the front so as to cover the opening 21. The transformer 8 is provided on a front surface of the base 22. Inputs of the transformer 8 are connected to connection terminals 31 that are exposed from the second container 3 with cables 81 that are housed in the second container 3. Cables (not shown) that are led out from the distribution board are connected to the connection terminals 31, and thereby commercial power is supplied to the transformer 8. The transformer 8 generates output voltages of 110 V/220 V or 110 V/230 V from the commercial power. Outputs of the transformer 8 are connected to the first and second contact receivers 5a and 5b that are housed in the second container 3, a voltage of 110 V is applied between the pair of first contact receivers 5a, 5a, and a voltage of 220 V is applied between the pair of second contact receivers 5b, 5b. Note that the output voltages of 110 V/220 V or 110 V/230 V of the transformer 8 are one example, and may have other voltage values.

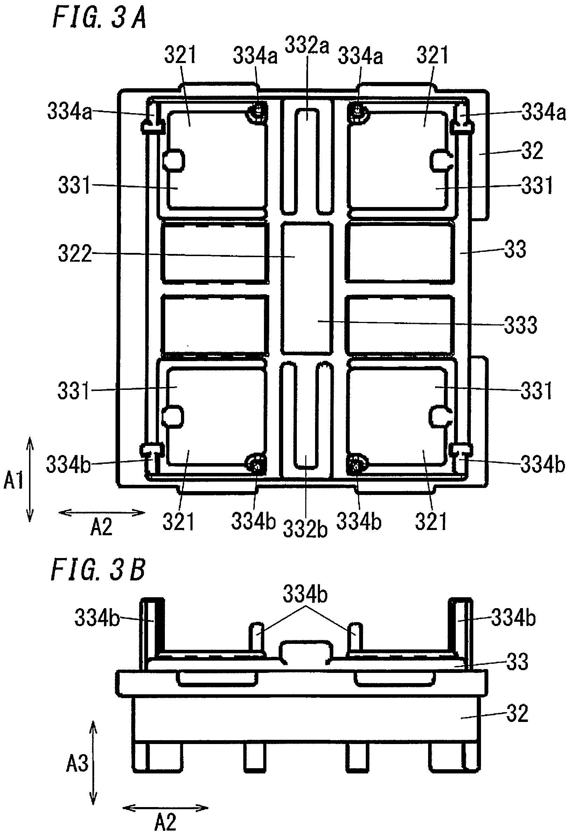

The second container 3 is provided on a right side of the first container 2 behind the cover 4 so as to oppose the first and second insertion portions 41a and 41b that are formed in the cover 4, and houses the first and second contact receivers 5a and 5b and the first and second lids 6a and 6b. Also, the second container 3 houses a first base 32 that holds the first and second contact receivers 5a and 5b and a second base 33 that holds the first and second lids 6a and 6b. The second base 33 is stacked in front of the first base 32. A front view of the first and second bases 32 and 33 is shown in FIG. 3A, and a bottom view thereof is shown in FIG. 3B.

The first base 32 is provided on a rear surface of the second container 3, a front surface thereof is formed in a rectangle-like shape, and the pair of first contact receivers 5a, 5a and the pair of second contact receivers 5b, 5b are provided on the front surface. Also, recesses 321 are formed in the four corners of the front surface of the first base 32, and the first and second contact receivers 5a and 5b are fitted into the respective recesses 321. Note that the pair of first contact receivers 5a, 5a is provided so as to oppose the pair of first insertion holes 42a, 42a in the front-rear direction A3, and the pair of second contact receivers 5b, 5b is provided so as to oppose the pair of second insertion holes 42b, 42b in the front-rear direction A3. Here, the first and second contact receivers 5a and 5b are made of a metal material having a spring property, and are brought into elastic contact with and thus electrically connected to the respective contacts 91a and 91b that are inserted through the first and second insertion holes 42a and 42b. Also, a recess 322 is formed in a central portion of the front surface of the first base 32, and a later-described slide member 34 is fitted into the recess 322.

The second base 33 and the first base 32 are stacked so as to be disposed in front of the first base 32, and two return springs 7 configured to bias the first and second lids 6a and 6b are provided on a front surface thereof that opposes a rear surface of the cover 4. Openings 331 shaped like a rectangle are provided in the four corners of the second base 33 so as not to close the first and second contact receivers 5a and 5b provided in the first base 32. Also, in the front surface of the second base 33, a guide groove 332a is provided between a pair of openings 331, 331 that opposes the pair of first contact receivers 5a, 5a, and a guide groove 332b is provided between a pair of openings 331, 331 that opposes the pair of first contact receivers 5b, 5b. The guide grooves 332a and 332b are formed along the up-down direction A1. Furthermore, an opening 333 shaped like a rectangle for inserting the slide member 34 provided in the first base 32 is provided in a central portion of the second base 33. The slide member 34 includes a shaft 341, a flange 342, and a guide portion 343. The shaft 341 is formed in a bar-like shape whose longitudinal direction is the front-rear direction A3. The flange 342 is formed at an front end of the shaft 341 so as to extend in the up-down direction A1 and the right-left direction A2, comes into contact with a peripheral edge of the opening 333 of the second base 33 from the rear side, and supports the second base 33. The guide portion 343 is formed in the flange 342 so as to project forward through the opening 333 of the second base 33, and a guide groove 344 is formed in the front surface along the up-down direction A1. Note that the guide grooves 332a and 332b formed in the second base 33 and the guide groove 344 formed in the guide portion 343 are formed so as to be continuous in the up-down direction A1.

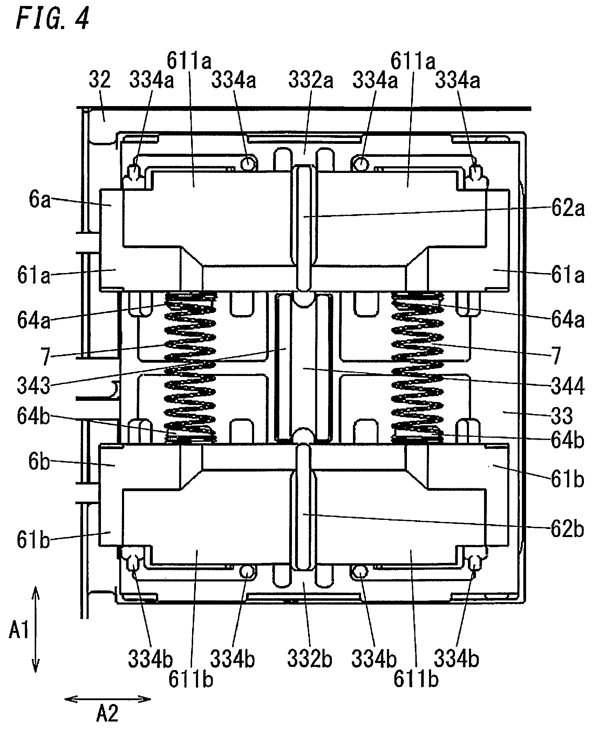

Also, the first lid 6a and the second lid 6b are provided on the front surface of the second base 33 side by side in the up-down direction A1, as shown in FIG. 4. The first lid 6a is configured to slide in the up-down direction A1 along the guide grooves 332a and 344. The second lid 6b is configured to slide in the up-down direction A1 along the guide grooves 332b and 344. Also, the two return springs 7 are provided between the first lid 6a and the second lid 6b in the up-down direction A1. Note that each of the guide grooves 332a and 334 corresponds to a first guide groove, and each of the guide grooves 332b and 334 corresponds to a second guide groove.

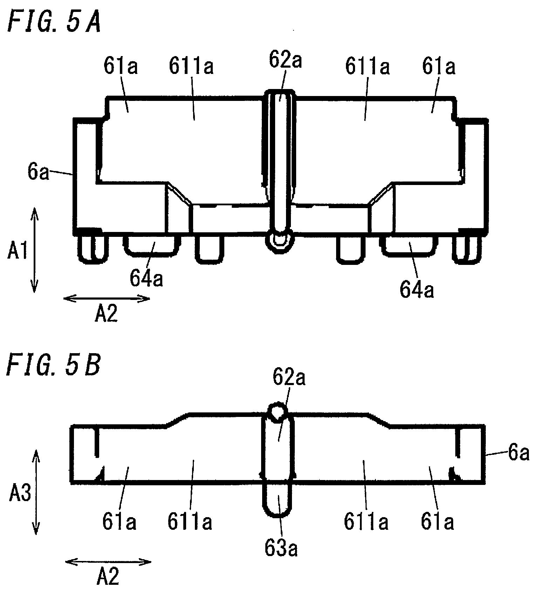

A front view and a top view of the first lid 6a are shown in FIGs. 5A and 5B, respectively. The first lid 6a includes a pair of lid pieces (pair of first lid pieces) 61a, 61a, a linking piece (first linking piece) 62a, a projection (first projection) 63a, a pair of projections 64a, a pair of projections 65a, and a pair of projections 66a.

The pair of lid pieces 61a, 61a is formed side by side in the right-left direction A2, and each close or open the corresponding first insertion hole 42a. Also, a front surface of the lid piece 61a is constituted by a sloping surface 611a that slopes rearward from a lower side (second end side) toward an upper side (first end side). That is, each sloping surface 611a slopes so as to separate from the front surface 43 from the lower side (second end side) toward the upper side (first end side) in the up-down direction A1. The first contact 91a, when inserted through the first insertion hole 42a, comes into contact with the sloping surfaces 611a. The linking piece 62a links the pair of lid pieces 61a, 61a that are formed side by side in the right-left direction A2 with each other. The projection 63a projects rearward from the linking piece 62a. The pair of projections 65a, 65a is formed on lower surfaces of the pair of lid pieces 61a, 61a. Each projection 65a projects from the lower surface of the lid piece 61a along the up-down direction A1. The pair of projections 66a, 66a is formed on the lower surfaces of the pair of lid pieces 61a, 61a. Each projection 66a projects from the lower surface of the lid piece 61a along the up-down direction A1.

The first lid 6a is configured to be able to, with the projection 63a being fitted into the guide grooves 332a and 344, slide along the guide grooves 332a and 344 in the up-down direction A1. According to the above configuration, the first lid 6a moves between a first closed position on the upper side (first end side) and a first open position on the lower side (second end side). The first closed position is the position at which the pair of lid pieces 61a, 61a closes the pair of first insertion holes 42a, 42a. The first open position is the position at which the pair of lid pieces 61a, 61a opens the pair of first insertion holes 42a, 42a. Note that the pair of lid pieces 61a, 61a closing the pair of first insertion holes 42a, 42a in the first closed position refers to the pair of lid pieces 61a, 61a being located between the pair of first insertion holes 42a, 42a and the pair of first contact receivers 5a, 5a in the front-rear direction A3. That is, in the first closed position, each first contact 91a that is inserted through the first insertion hole 42a cannot come into conductive contact with the first contact receiver 5a due to the lid piece 61a.

The second lid 6b has the same configuration as the first lid 6a and is vertically symmetrical thereto. The second lid 6b includes a pair of lid pieces (pair of second lid pieces) 61b, 61b, a linking piece (second linking piece) 62b, a projection (second projection) 63b, a pair of projections 64b, a pair of projections 65b, and a pair of projections 66b.

The pair of lid pieces 61b, 61b is formed side by side in the right-left direction A2, and each close or open the corresponding second insertion hole 42b. Also, a front surface of the lid piece 61b is constituted by a sloping surface 611b that slopes rearward from the upper side (first end side) toward the lower side (second end side). That is, each sloping surface 611b slopes so as to separate from the front surface 43 from the upper side (first end side) toward the lower side (second end side) in the up-down direction A1. The first contact 91a, when inserted through the second insertion hole 42b, comes into contact with the sloping surfaces 611b. The linking piece 62b links the pair of lid pieces 61b, 61b that are formed side by side in the right-left direction A2 with each other. The projection 63b projects rearward from the linking piece 62b. The pair of projections 65b, 65b are formed on upper surfaces of the pair of lid pieces 61b, 61b. Each projection 65b projects from the upper surface of the lid piece 61b along the up-down direction A1. The pair of projections 66b, 66b is formed on the upper surfaces of the pair of lid pieces 61b, 61b. Each projection 66b projects from the upper surface of the lid piece 61b along the up-down direction A1.

The second lid 6b is configured to be able to, with the projection 63b being fitted into the guide grooves 332b and 344, slide along the guide grooves 332b and 344 in the up-down direction A1. According to the above configuration, the second lid 6b moves between a second closed position on the lower side (second end side) and a second open position on the upper side (first end side). The second closed position is the position at which the pair of lid pieces 61b, 61b closes the pair of second insertion holes 42b, 42b. The second open position is the position at which the pair of lid pieces 61b, 61b opens the pair of second insertion holes 42b, 42b. Note that the pair of lid pieces 61b, 61b closing the pair of second insertion holes 42a, 42a in the second closed position refers to the pair of lid pieces 61b, 61b being located between the pair of second insertion holes 42b, 42b and the pair of second contact receivers 5b, 5b in the front-rear direction A3. That is, in the second closed position, each second contact 91b that is inserted through the second insertion hole 42b cannot come into conductive contact with the second contact receiver 5b due to the lid piece 61b.

Each return spring 7 is constituted by a compression spring shaped like a coil that expands and contracts in the up-down direction A1, and is provided between the first lid 6a and the second lid 6b in the up-down direction A1. The projections 64a are formed in the respective lower surfaces of the pair of lid pieces 61a in the first lid 6a, and the projections 64b are formed in the respective upper surfaces of the pair of lid pieces 61b in the second lid 6b. Upper end portions of the two return springs 7 are fitted into the respective projections 64a formed in the lid pieces 61a of the first lid 6a, and lower end portions of the two return springs 7 are fitted into the respective projections 64b formed in the lid pieces 61b of the second lid 6b. That is, the return springs 7 are each interposed between the lid piece 61a of the first lid 6a and the lid piece 61b of the second lid 6b that oppose each other in the up-down direction A1, and bias the first lid 6a upward and the second lid 6b downward.

Also, two or more projections 334a that define an upper end position of the first lid 6a and two or more projections 334b that define a lower end position of the second lid 6b are formed in the second base 33. When the contacts 91a of the first plug 9a are not inserted, the first lid 6a is biased upward by the return springs 7, and thereby the upper surface thereof is brought into contact with the projections 334a. The position (upper end position) at which the first lid 6a comes into contact with the projections 334a is the first closed position at which the first lid 6a closes the pair of first insertion holes 42a. Also, when the contacts 91b of the second plug 9b are not inserted, the second lid 6b is biased downward by the return springs 7, and thereby the lower surface thereof is brought into contact with the projections 334b. The position (lower end position) at which the second lid 6b comes into contact with the projections 334b is the second closed position at which the second lid 6b closes the pair of second insertion holes 42b.

Next, operations when a plug is connected to the electrical outlet of the present embodiment will be described. Here, a case where the first plug 9a is connected to the electrical outlet will be described.

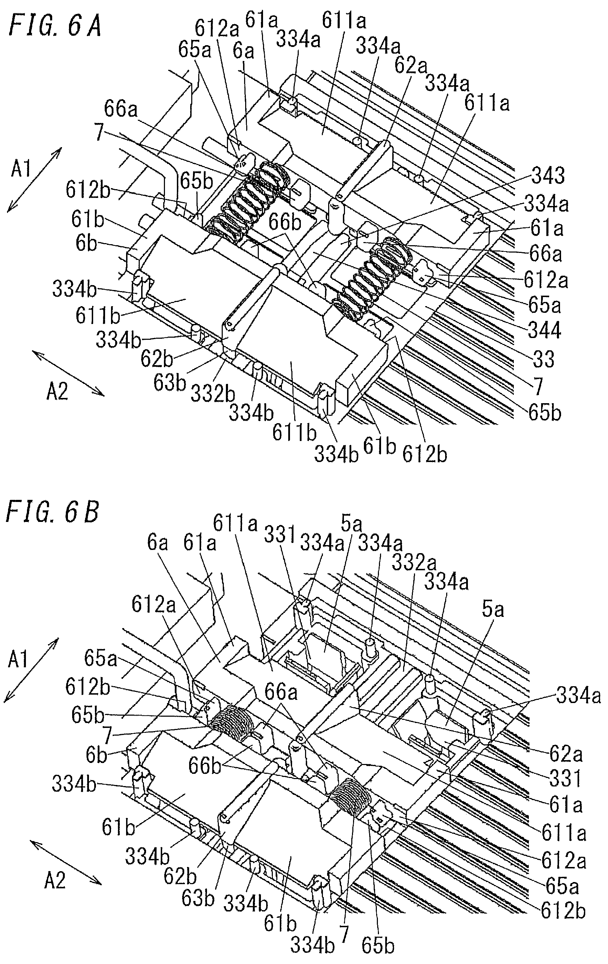

First, when the first and second plugs 9a and 9b are not connected to the electrical outlet, the first and second lids 6a and 6b are biased to the first and second closed positions by the return springs 7, and thereby close the first and second insertion holes 42a and 42b, as shown in FIG. 6A.

When the pair of contacts 91a included in the first plug 9a are inserted through the pair of first insertion holes 42a, tips of the contacts 91a come into contact with the respective sloping surfaces 611a formed on the front surfaces of the lid pieces 61a of the first lid 6a. As described above, the sloping surfaces 611a of the lid piece 61a slope rearward from the lower side toward the upper side. Accordingly, the force applied in the rearward direction to the lid pieces 61a when the contacts 91a of the first plug 9a are inserted is distributed in the downward direction due to the sloping surfaces 611a of the lid pieces 61a. Thereby, the first lid 6a moves downward along the guide grooves 332a and 344 while compressing the return springs 7, as the insertion amount of the contacts 91a of the first plug 9a increases. Then, when the first lid 6a is displaced to the first open position at which the pair of first insertion holes 42a is opened, as shown in FIG. 6B, the pair of contacts 91a of the first plug 9a is brought into conductive contact with the pair of first contact receivers 5a. At this time, since the upper surface of the first lid 6a is biased toward side surfaces (lower surfaces) of the contacts 91a of the first plug 9a by the return springs 7, the first lid 6a is fixed in the first open position at which the first lid 6a is positioned in front of the guide portion 343.

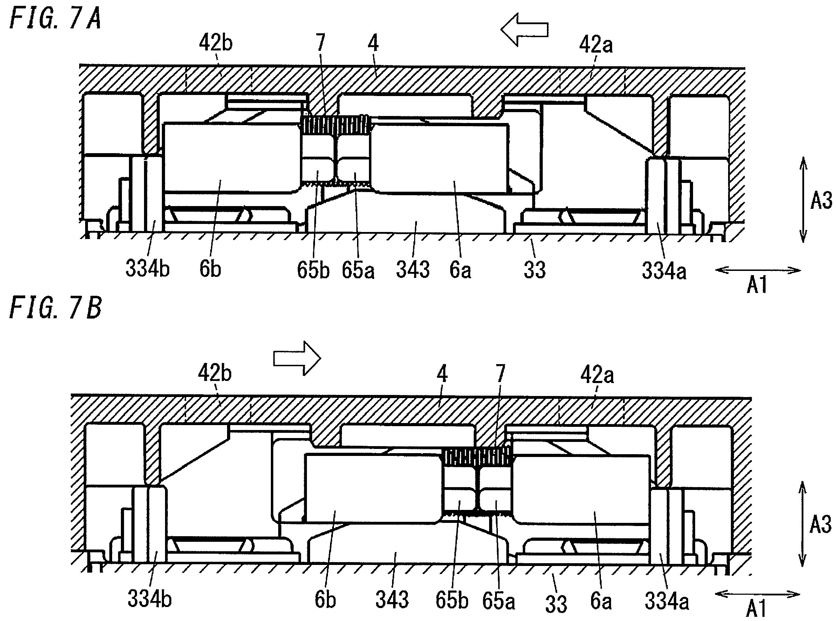

As described above, when the contacts 91a of the first plug 9a are inserted through the first insertion holes 42a, the first lid 6a moves downward toward the second lid 6b, and is displaced to the first open position. At this time, the projections 65a of the first lid 6a come into contact with the respective projections 65b of the second lid 6b, and the projections 66a of the first lid 6a come into contact with the respective projections 66b of the second lid 6b, as shown in FIG. 7A. Accordingly, because the first lid 6a is fixed in a position (first open position) that is in proximity to the upper side of the second lid 6b, the second lid 6b is prevented from moving upward by the first lid 6a. Therefore, the second lid 6b cannot move upward from the second closed position at which the second insertion holes 42b are closed toward the second open position at which the second insertion holes 42b are opened. That is, when the first lid 6a is displaced to the first open position, the second lid 6b is kept at the second closed position due to the force from the return springs 7. Therefore, when the contacts 91a of the first plug 9a are inserted through the first insertion holes 42a, and are brought into conductive contact with the first contact receivers 5a, the contacts 91b of the second plug 9b cannot be inserted through the second insertion holes 42b, and cannot be brought into conductive contact with the second contact receivers 5b.

Note that although the case where the contacts 91a of the first plug 9a are inserted through the first insertion holes 42a has been described, similar operations can be performed in the case where the contacts 91b of the second plug 9b are inserted through the second insertion holes 42b. That is, when the contacts 91b of the second plug 9b are inserted through the respective second insertion holes 42b, the second lid 6b moves upward toward the first lid 6a, and prevents downward movement of the first lid 6a, as shown in FIG. 7B. In this case, the projections 65b of the second lid 6b are brought into contact with the respective projections 65a of the first lid 6a, and the projections 66b of the second lid 6b are brought into contact with the respective projections 66a of the first lid 6a. As a result, the first lid 6a is kept at the first closed position due to the force from the return springs 7 when the second lid 6b is displaced to the second open position. Therefore, when the contacts 91b of the second plug 9b are inserted through the second insertion holes 42b and are brought into conductive contact with the second contact receivers 5b, the contacts 91a of the first plug 9a cannot be inserted through the first insertion holes 42a and brought into conductive contact with the first contact receivers 5a.

Also, when neither of the first and second plugs 9a and 9b are connected to the electrical outlet, the first and second lids 6a and 6b are biased to the first and second closed position by the return springs 7, respectively. Accordingly, the first and second insertion holes 42a and 42b are closed, and thereby foreign objects can be prevented from entering into the body 1 via the first and second insertion holes 42a and 42b.

As described above, the electrical outlet of the present embodiment includes a body 1, first and second contact receivers 5a and 5b, first and second lids 6a and 6b, and a return spring 7.

At least one first insertion hole 42a through which a contact 91a of a first plug 9a is to be inserted and at least one second insertion hole 42b through which a contact 91b of a second plug 9b is to be inserted are formed side by side in one direction (up-down direction A1) in the body 1.

The first contact receiver 5a is housed in the body 1, and the contact 91a of the first plug 9a, when inserted through the first insertion hole 42a, is brought into conductive contact therewith. The second contact receiver 5b is housed in the body 1, and the contact 91b of the second plug 9b, when inserted through the second insertion hole 42b, is brought into conductive contact therewith.

The first lid 6a is housed in the body 1, and comes into contact with the contact 91a, of the first plug 9a, that is inserted through the first insertion hole 42a. The first lid 6a moves, as the insertion amount of the contact 91a of the first plug 9a increases, from a first closed position on a first end side (upper side, one end side) in the one direction toward a first open position on a second end side (lower side, the other end side) in the one direction. The first closed position is a position at which the first lid 6a closes the first insertion hole 42a. The first open position is a position at which the first lid 6a opens the first insertion hole 42a. The second lid 6b is housed in the body 1, and comes into contact with the contact 91b, of the second plug 9b, that is inserted through the second insertion hole 42b. The second lid 6b moves, as the insertion amount of the contact 91b of the second plug 9b increases, from a second closed position on the second end side in the one direction toward a second open position on the first end side in the one direction. The second closed position is a position at which the second lid 6b closes the second insertion hole 42b. The second open position is a position at which the second lid 6b opens the second insertion hole 42b.

The return spring 7 is provided between the first lid 6a and the second lid 6b in the one direction, positions the first lid 6a in the first closed position by biasing the first lid 6a toward the first end side in the one direction, and positions the second lid 6b in the second closed position by biasing the second lid 6b toward the second end side in the one direction.

The first lid 6a, upon the contact 91a of the first plug 9a being inserted through the first insertion hole 42a, moves from the first closed position toward the second end side in the one direction and is displaced to the first open position while compressing the return spring 7. The second lid 6b, upon the contact 91b of the second plug 9b being inserted through the second insertion hole 42b, moves from the second closed position toward the first end side in the one direction and is displaced to the second open position while compressing the return spring 7.

In the electrical outlet of the present embodiment, as a result of being configured as described above, in the case where one of the first and second plugs 9a and 9b are connected, the other plug cannot be connected. That is, the two plugs 9a and 9b can be prevented from being connected at the same time. Accordingly, failure of the transformer 8 and a connected apparatus due to the two plugs 9a and 9b being connected at the same time can be prevented.

Furthermore, the return spring 7 of the present embodiment is provided between a lid piece 61a of the first lid 6a and a lid piece 61b of the second lid 6b, biases the lid piece 61a of the first lid 6a upward, and also biases the lid piece 61b of the second lid 6b downward. That is, in the present embodiment, one return spring 7 biases two lid pieces 61a and 61b. Accordingly, compared with a conventional electrical outlet in which one return spring biases one lid piece, the number of return springs can be reduced, and the electrical outlet can be reduced in size.

As with the present embodiment, the first insertion hole 42a and the second insertion hole 42b are preferably formed in a predetermined surface (front surface 43) that extends along one direction (up-down direction A1) in the body 1. In this case, the first lid 6a includes a first lid piece 61a having a first sloping surface 611a. The first sloping surface 611a slopes away from the predetermined surface from the second end side (lower side) toward the first end side (upper side) in the one direction. The contact 91a of the first plug 9a, when inserted through the first insertion hole 42a, is brought into contact with the first sloping surface 611a. The first lid 6a, upon the contact 91a of the first plug 9a being inserted through the first insertion hole 42a and brought into contact with the first sloping surface 611a, moves toward the second end side in the one direction and is displaced to the first open position while compressing the return spring 7. The second lid 6b includes a second lid piece 61b having a second sloping surface 611b. The second sloping surface 611b slopes away from the predetermined surface from the first end side toward the second end side in the one direction. The contact 91b of the second plug 9b, when inserted through the second insertion hole 42b, is brought into contact with the second sloping surface 611b. The second lid 6b, upon the contact 91b of the second plug 9b being inserted through the second insertion hole 42b and brought into contact with the second sloping surface 611b, moves toward the first end side in the one direction and is displaced to the second open position while compressing the return spring 7.

As with the present embodiment, it is preferable that at least one first insertion hole 42a includes a pair of the first insertion holes 42a formed in the body 1. At least one second insertion hole 42b includes a pair of the second insertion holes 42b formed in the body 1. The pair of first insertion holes 42a, 42a and the pair of second insertion holes 42b, 42b are in one-to-one correspondence with each other. Each of the pair of first insertion holes 42a are arranged side by side in the one direction (up-down direction A1) with a corresponding second insertion hole 42b of the pair of second insertion holes 42b.

As with the present embodiment, the pair of first insertion holes 42a, 42a and the pair of second insertion holes 42b, 42b are preferably formed in a predetermined surface (front surface 43), of the body 1, that extends along the one direction (up-down direction A1). In this case, the first lid 6a includes a pair of first lid pieces 61a each having the first sloping surface 611a. The pair of first sloping surfaces 611a, 611a slopes away from the predetermined surface from the second end side (lower side) toward the first end side (upper side) in the one direction. The contacts 91a of the first plug 9a, when inserted through the pair of first insertion holes 42a, 42a, are brought into contact with the pair of first sloping surfaces 611a, 611a. The first lid 6a, upon the contacts 91a of the first plug 9a being inserted through the pair of first insertion holes 42a, 42a and brought into contact with the pair of first sloping surfaces 611a, 611a, moves toward the second end side in the one direction and is displaced to the first open position while compressing the return spring 7. The second lid 6b includes the pair of second lid pieces 61b each having the second sloping surface 611b. The pair of second sloping surfaces 611b, 611b slopes away from the predetermined surface from the first end side toward the second end side in the one direction. The contacts 91b of the second plug 9b, when inserted through the pair of second insertion holes 42b, 42b, are brought into contact with the pair of second sloping surfaces 611b, 611b. The second lid 6b, upon the contacts 91b of the second plug 9b being inserted through the pair of second insertion holes 42b, 42b and brought into contact with the pair of second sloping surfaces 611b, 611b, moves toward the first end side in the one direction and is displaced to the second open position while compressing the return spring 7.

As with the present embodiment, a first guide groove (guide grooves 332a and 344) and a second guide groove (guide grooves 332b and 344) are preferably formed in the body 1 so as to extend along one direction (up-down direction A1). The first lid 6a further includes a first linking piece 62a and a first projection 63a. The first linking piece 62a links the pair of first lid pieces 61a, 61a. The first projection 63a projects in a direction (rearward) orthogonal to the one direction from the first linking piece 62a, and is fitted into the first guide groove. The second lid 6b further includes a second linking piece 62b and a second projection 63b. The second linking piece 62b links the pair of second lid pieces 61b, 61b. The second projection 63b projects in a direction orthogonal to the one direction from the second linking piece 62b, and is fitted into the second guide groove.

As with the present embodiment, the electrical outlet preferably further includes a transformer 8. The transformer 8 is housed in the body 1. The outputs of the transformer 8 are connected to the first contact receiver 5a and the second contact receiver 5b.

Although the present invention has been described in a preferred embodiment, various modifications and variations are possible by those skilled in the art without departing from the spirit or scope of this invention, that is, the claims.

## Claims

1. An electrical outlet comprising:
a body in which at least one first insertion hole through which a contact of a first plug is to be inserted and at least one second insertion hole through which a contact of a second plug is to be inserted are formed side by side in one direction;
a first contact receiver that is housed in the body and with which the contact of the first plug, when inserted through the at least one first insertion hole, is brought into conductive contact;
a second contact receiver that is housed in the body and with which the contact of the second plug, when inserted through the at least one second insertion hole, is brought into conductive contact;
a first lid that is housed in the body and comes into contact with the contact of the first plug that is inserted through the at least one first insertion hole, and is configured to move, as an insertion amount of the contact of the first plug increases, from a first closed position, on a first end side in the one direction, at which the at least one first insertion hole is closed toward a first open position, on a second end side in the one direction, at which the at least one first insertion hole is open;
a second lid that is housed in the body and comes into contact with the contact of the second plug that is inserted through the at least one second insertion hole, and is configured to move, as an insertion amount of the contact of the second plug increases, from a second closed position, on the second end side in the one direction, at which the at least one second insertion hole is closed toward a second open position, on the first end side in the one direction, at which the at least one second insertion hole is open; and
a return spring that is provided between the first lid and the second lid in the one direction, and is configured to position the first lid in the first closed position by biasing the first lid toward the first end side in the one direction, and position the second lid in the second closed position by biasing the second lid toward the second end side in the one direction,
when the contact of the first plug is inserted through the at least one first insertion hole, the first lid moving toward the second end side in the one direction from the first closed position and being displaced to the first open position while compressing the return spring, and
when the contact of the second plug is inserted through the at least one second insertion hole, the second lid moving toward the first end side in the one direction from the second closed position and being displaced to the second open position while compressing the return spring.

2. The electrical outlet according to claim 1,
wherein the at least one first insertion hole and the at least one second insertion hole are formed in a predetermined surface, of the body, that extends along the one direction,
wherein the first lid comprises a first lid piece having a first sloping surface that slopes away from the predetermined surface from the second end side toward the first end side in the one direction, the contact of the first plug, when inserted through the at least one first insertion hole, being brought into contact with the first sloping surface,
wherein the first lid, upon the contact of the first plug being inserted through the at least one first insertion hole and brought into contact with the first sloping surface, moves toward the second end side in the one direction and is displaced to the first open position while compressing the return spring,
wherein the second lid comprises a second lid piece having a second sloping surface that slopes away from the predetermined surface from the first end side toward the second end side in the one direction, the contact of the second plug, when inserted through the at least one second insertion hole, being brought into contact with the second sloping surface, and
wherein the second lid, upon the contact of the second plug being inserted through the at least one second insertion hole and brought into contact with the second sloping surface, moves toward the first end side in the one direction and is displaced to the second open position while compressing the return spring.

3. The electrical outlet according to claim 1,
wherein the at least one first insertion hole comprises a pair of first insertion holes formed in the body,
wherein the at least one second insertion hole comprises a pair of second insertion holes formed in the body, and
wherein the pair of first insertion holes and the pair of second insertion holes are in one-to-one correspondence with each other, each of the pair of first insertion holes being arranged side by side in the one direction with a corresponding second insertion hole of the pair of second insertion holes.

4. The electrical outlet according to claim 3,
wherein the pair of first insertion holes and the pair of second insertion holes are formed in a predetermined surface, of the body, that extends along the one direction,
wherein the first lid comprises a pair of first lid pieces each having a first sloping surface that slopes away from the predetermined surface from the second end side toward the first end side in the one direction, contacts of the first plug, when inserted through the pair of first insertion holes, being brought into contact with the pair of first sloping surfaces,
wherein the first lid, upon the contacts of the first plug being inserted through the pair of first insertion holes and brought into contact with the pair of first sloping surfaces, moves toward the second end side in the one direction and is displaced to the first open position while compressing the return spring,
wherein the second lid comprises a pair of second lid pieces each having a second sloping surface that slopes away from the predetermined surface from the first end side toward the second end side in the one direction, contacts of the second plug, when inserted through the pair of second insertion holes, being brought into contact with the pair of second sloping surfaces, and
wherein the second lid, upon the contacts of the second plug being inserted through the pair of second insertion holes and brought into contact with the pair of second sloping surfaces, moves toward the first end side in the one direction and is displaced to the second open position while compressing the return spring.

5. The electrical outlet according to claim 4,
wherein a first guide groove and a second guide groove that extend along the one direction are formed in the body,
wherein the first lid further comprises:
a first linking piece that links the pair of first lid pieces; and
a first projection that projects from the first linking piece in a direction orthogonal to the one direction, and is fitted into the first guide groove, and
wherein the second lid further comprises:
a second linking piece that links the pair of second lid pieces; and
a second projection that projects from the second linking piece in a direction orthogonal to the one direction, and is fitted into the second guide groove.

6. The electrical outlet according to any one of claims 1 to 5, further comprising a transformer that is housed in the body,
wherein outputs of the transformer are connected to the first contact receiver and the second contact receiver.
